# EUROPÄISCHE PATENTSCHRIFT

(11) **EP 0 846 587 B1**
(45) Veröffentlichungstag und Bekanntmachung des Hinweises auf die Patenterteilung: **17.12.2003**
(21) Anmeldenummer: 97119425.3
(22) Anmeldetag: 06.11.1997
(51) Int. Cl.: B60K 31/00

(54) **Verfahren und Vorrichtung zur Geschwindigkeitsregelung eines Kraftfahrzeuges**
Method and device for controlling the speed of a motor vehicle
Méthode et dispositif pour régler la vitesse d'un véhicule à moteur

(30) Priorität: 04.12.1996 DE 19650168
(43) Veröffentlichungstag der Anmeldung: 10.06.1998
(73) Patentinhaber: Volkswagen Aktiengesellschaft, 38436 Wolfsburg (DE)
(72) Erfinder: Andreas, Peter, Dipl.-Ing., 38518 Gifhorn (DE)
(74) Vertreter: Meyer, Enno, Dr.

(56) Entgegenhaltungen:
- US-A- 3 921 749
- US-A- 4 519 469

## Beschreibung

Die Erfindung betrifft ein Verfahren zur Geschwindigkeitsregelung eines Kraftfahrzeuges, gemäß dem Oberbegriff des Anspruchs 1. Des weiteren betrifft die Erfindung eine Vorrichtung zur Geschwindigkeitsregelung eines Kraftfahrzeuges mit einem Abstandssensor zur Detektierung von Abständen zu einem vor dem Kraftfahrzeug erfaßten Objekt, gemäß dem Oberbegriff des Anspruchs 10.

Die deutsche Offenlegungsschrift DE-A-34 19 065 beschreibt eine Einrichtung und ein Verfahren zum automatischen Regeln der Geschwindigkeit eines Kraftfahrzeuges, die derart arbeitet, daß die Fahrgeschwindigkeit auf einer eingestellten Geschwindigkeit gehalten wird, wenn kein Frontfahrzeug vor dem geregelten Fahrzeug herfährt, dagegen die Geschwindigkeit entsprechend dem Abstand zu einem Frontfahrzeug geregelt wird, falls ein solches erfaßt ist. Die Schrift behandelt das Problem, wenn ein unterhalb eines Geschwindigkeitsgrenzwertes vorherfahrendes Fahrzeug plötzlich aus dem Entfernungsbereich verschwindet. Dazu wird vorgeschlagen, beide Regelungsfunktionen außer Kraft zu setzen, wenn die Fahrgeschwindigkeit außerhalb einem vorgegebenen Bereich um die eingestellte Fahrgeschwindigkeit liegt, wenn kein Frontfahrzeug vorhanden ist, oder nachdem das andere Fahrzeug aus einem vorderen Überwachungsbereich verschwunden ist.

In der europäischen Patentanmeldung EP-A-657 857 ist eine Abstandsregelung offenbart, bei der nach Bestimmung des Fahrweges des eigenen Fahrzeuges ein vor dem Kraftfahrzeug befindliches Fahrzeug erkannt wird, an das das eigene Fahrzeug andocken soll. Danach erfolgt der Andockvorgang selbst. Wird das Objekt aus irgendeinem Grund verloren, wird der Andockvorgang beendet d. h. die Abstandsregelung schaltet ab.

Der Verlust eines erfaßten Objektes kann verschiedene Gründe haben, das eigene Fahrzeug hat einen Überholvorgang eingeleitet, die befahrene Straße macht eine Kurve und der Abstandssensor erfaßt nicht den gesamten Kurvenverlauf oder das erfaßte Objekt ist abgebogen. In jedem dieser Fälle muß die Geschwindigkeitsregelung für die Akzeptanz des Menschen anders reagieren.

US-4 519 469 offenbart ein Verfahren zur Geschwindigkeitsregelung eines Kraftfahrzeugs (gemäß dem Oberbegriff des Anspruchs 1,) bei dem die Abstände zu einem vor dem Kraftfahrzeug fahrenden Objekt von einem Abstandssensor detektiert und einer Regelungseinrichtung zugeführt werden, die in Abhängigkeit eines zumindest aus der normalen Fahrgeschwindigkeit ermittelten Sollabstands zum erfaßten Objekt und/oder einer vorgegebenen Sollgeschwindigkeit Stellgrößen zur Einstellung der Fahrgeschwindigkeit des Kraftfahrzeugs bildet, wobei bei Objektverlust durch den Abstandssensor der Grund des Objektverlustes durch die Regelungseinrichtung ermittelt wird, und wobei die Stellgröße zur Einstellung der Fahrgeschwindigkeit in Abhängigkeit des,Grundes des Objektverlustes gebildet wird.

Es ist deshalb die Aufgabe der Erfindung, eine Geschwindigkeitsregelung zu schaffen, die diesen Umstand berücksichtigt und im weiten Umfang an das menschliche Verhalten angepaßt ist.

Die Aufgabe der Erfindung wird durch ein Verfahren gemäß Patentanspruch 1 und eine Vorrichtung gemäß Patentanspruch 10 gelöst. Vorteilhafte Aus- und Weiterbildungen sind in den Unteransprüchen dargestellt.

Erfindungsgemäß ist vorgesehen, daß bei Objektverlust durch den Abstandssensor der Grund des Objektverlustes geprüft wird, nämlich ob ein Überholvorgang des eigenen Fahrzeuges eingeleitet wurde, eine Kurve sich vor dem eigenen Fahrzeug befindet oder ob das erfaßte Objekt beispielsweise durch einen Abbiegevorgang verlorengegangen ist. Daraufhin wird in Abhängigkeit des Grundes des Objektverlustes die Stellgrößen zur Einstellung der Fahrgeschwindigkeit von der Regelungseinrichtung gebildet.

Dabei wird bei Objektverlust der letzte detektierte Abstand zum erfaßten Objekt in der Regelungseinrichtung festgehalten und mit dem zurückgelegten Weg des Kraftfahrzeuges seit dem Objektverlust kontinuierlich verglichen wird.

Solange der zurückgelegte Weg kleiner als der letzte detektierte Abstand zum erfaßten Objekt oder gleich dem letzten detektierten Abstand ist, wird von der Regelungseinrichtung geprüft, ob ein Überholvorgang eingeleitet wurde. Dies kann vorteilhafterweise durch die Überprüfung der linken Blinkerleuchte erfolgen. Wurde ein Überholvorgang erkannt und kein neues relevantes Objekt erfaßt, bildet die Regelungseinrichtung eine Stellgröße für die Fahrgeschwindigkeit in Abhängigkeit der vorgegebenen Sollgeschwindigkeit in Verbindung mit einer für den Überholvorgang vorgegebenen Sollbeschleunigung. Als vorgegebene Sollgeschwindigkeit ist bevorzugt die vom Fahrer eingestellte Sollgeschwindigkeit einzusetzen.

Wenn das Kraftfahrzeug den Punkt an dem der Abstandssensor das erfaßte Objekt verloren hat, überschreitet und kein Überholvorgang eingeleitet wurde, prüft die Regelungseinrichtung, ob die befahrene Straße einen Krümmungsradius vorgegebener Größe unterschreitet. Ist dies der Fall, bildet die Regelungseinrichtung eine Stellgröße für die Fahrgeschwindigkeit in Abhängigkeit einer vom Krümmungsradius der befahrenen Straße abhängigen Sollgeschwindigkeit in Verbindung mit einer vom Krümmungsradius abhängigen Sollbeschleunigung.

Ist der Krümmungsradius der befahrenen Straße größer als ein vorgegebener Schwellwert, befindet sich das Kraftfahrzeug auf einem im wesentlichen geraden Straßenabschnitt. Die Stellgröße wird dann von der Regelungseinrichtung in Abhängigkeit der vom Fahrer vorgegebenen Sollgeschwindigkeit in Verbindung mit einer vorgegebenen oder ermittelbaren Sollbeschleunigung gebildet.

Wird während des Überholvorganges, der Kurvenfahrt oder der Geschwindigkeitsregelung auf gerader Strecke durch den Abstandssensor ein relevantes Objekt erfaßt, bildet die Regelungseinrichtung die Stellgröße für die Fahrgeschwindigkeit zumindest in Abhängigkeit des ermittelten Sollabstandes zu dem erfaßten Objekt.

In einer weiteren Ausbildung der Erfindung ist vorgesehen, den Sollabstand zu einem erfaßten Objekt bei einem Krümmungsradius der befahrenen Straße kleiner als ein vorgegebener Krümmungsradius zusätzlich in Abhängigkeit des Erfassungsbereiches des Abstandssensors zu bilden, wobei ein Mindestabstand nicht unterschritten werden darf. Das hat den Vorteil, daß bei Objektverlust und Wiedererfasssen eines Objektes in Kurvenfahrten die Regelungseinrichtung keine extrem unterschiedlichen Stellgrößen für die Fahrgeschwindigkeit bildet. Das sogenannte "Sägen" des Kraftfahrzeuges wird verhindert.

Die erfindungsgemäße Geschwindigkeitsregelung weist den wesentlichen Vorteil auf, daß sie sich bei Objektverlust und ggf. einem erneuten Erfassen des gleichen oder eines anderen Objektes ähnlich wie ein Mensch verhält, wodurch die Akzeptanz der Regelungseinrichtung durch den Menschen erhöht wird.

Nachfolgend wird die Erfindung anhand eines Ausführungsbeispiels näher erläutert. Die zugehörigen Zeichnungen zeigen:
Figur 1 ein Blockschaltbild einer Geschwindigkeitsregelung und
Figur 2 ein Ablaufdiagramm des erfindungsgemäßen Verfahrens.

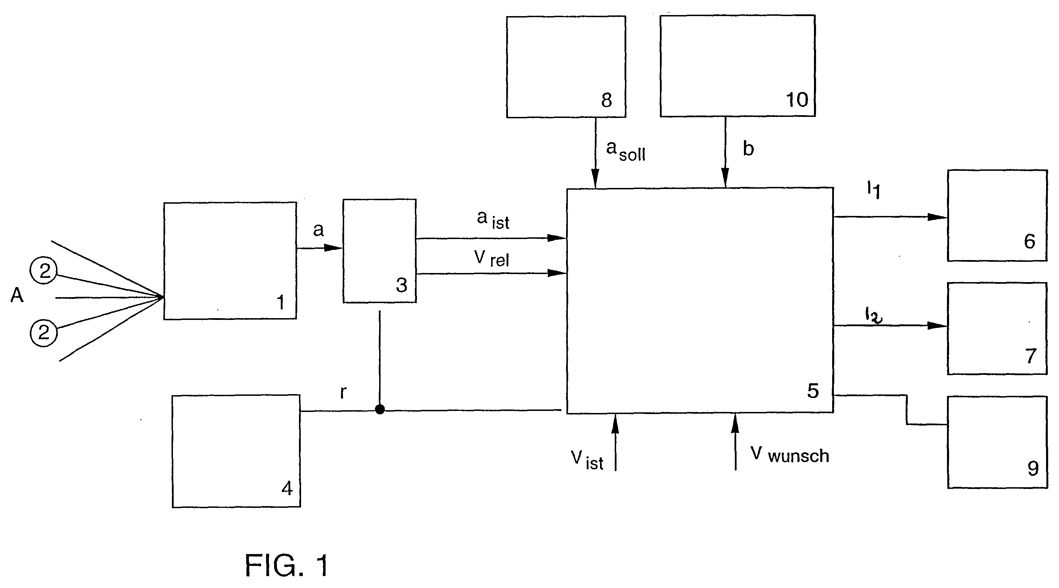

Die in einem Kraftfahrzeug integrierte und autark arbeitende Geschwindigkeitsregelungseinrichtung, deren Blockschaltbild in Figur 1 gezeigt ist, weist einen Abstandssensor 1 auf, dessen Ausgangssignal Abstandsdaten a aller in seinem Erfassungsbereich A befindlichen Objekte 2 sind. Die Abstandsdaten a des Abstandssensors werden einer Verarbeitungseinrichtung 3 zugeführt, die eine Klassifizierung der Objekte 2 als für die Geschwindigkeitsregelung relevante Objekte durchführt. Dazu stehen mehrere Möglichkeiten zur Verfügung. Einmal ist es möglich, die Abstandsdaten a des Abstandssensors 1 über das Ausgangssignal r einer Einrichtung 4 zur Ermittlung des Krümmungsradius der befahrenen Straße zu filtern. Dabei kann der Krümmungsradius über an den Rädern des Kraftfahrzeuges angeordnete Raddrehzahlsensoren, den Lenkwinkel, Gierratensensoren als auch über digital abgespeicherte Datensätze von Straßenverläufen ermittelt werden. Auch Parameter des Abstandssensors 1 selbst können für eine Validierung der Abstandsdaten a eingesetzt werden. Beispielsweise ist bei einem Mehrstrahlsensor der Seitenversatz des Objektes zum mittleren Strahl ein Maß für die Relevanz des Objektes 2. Wird ein Objekt von mehr als von einem Strahl erfaßt, läßt sich eine Aussage über die Breite des Objektes treffen. Über die Änderung der Relativgeschwindigkeit zwischen dem Kraftfahrzeug und dem erfaßten Objekt kann eine Aussage getroffen werden, ob es sich um ein stehendes oder ein fahrendes Objekt handelt.

Die Verarbeitungseinrichtung 3 leitet nach der Klassifizierung der erfaßten Objekte, die Abstandsdaten aᵢₛₜ der relevanten Objekte sowie deren Relativgeschwindigkeit vᵣₑₗ an die Regelungseinrichtung 5, welche die Stellgrößen l1 und l2 für die Bremseinrichtung 6 und die Antriebsmaschine 7 zur Einstellung der Fahrgeschwindigkeit bildet. Neben den Abstandsdaten aᵢₛₜ wird der Regelungseinrichtung 5 die vom Fahrer vorgegebene Sollgeschwindigkeit v_{wunsch}, die Relativgeschwindigkeit zwischen Kraftfahrzeug und Objekt, der erfaßte oder ermittelte Krümmungsradius r, der befahrenen Straße, die momentane Fahrgeschwindigkeit vᵢₛₜ, der in der Einrichtung 8 festgelegte Sollabstand aₛₒₗₗ zum erfaßten Objekt sowie ein Signal b zur Erkennung eines Überholvorganges zugeleitet. Außerdem kann mit der Regelungseinrichtung 5 eine Anzeigeeinrichtung 9 verbunden sein, die den Fahrzeugführer im Gefahrenfall warnt.

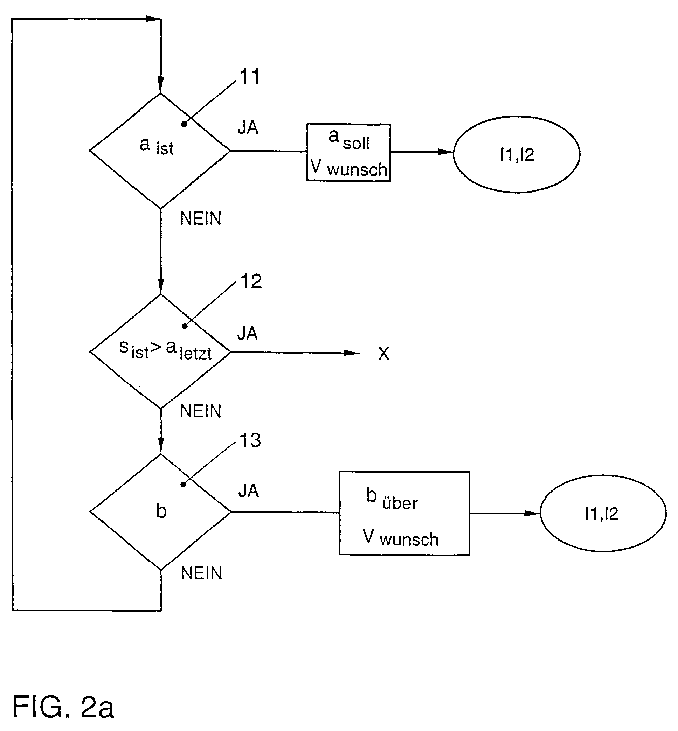

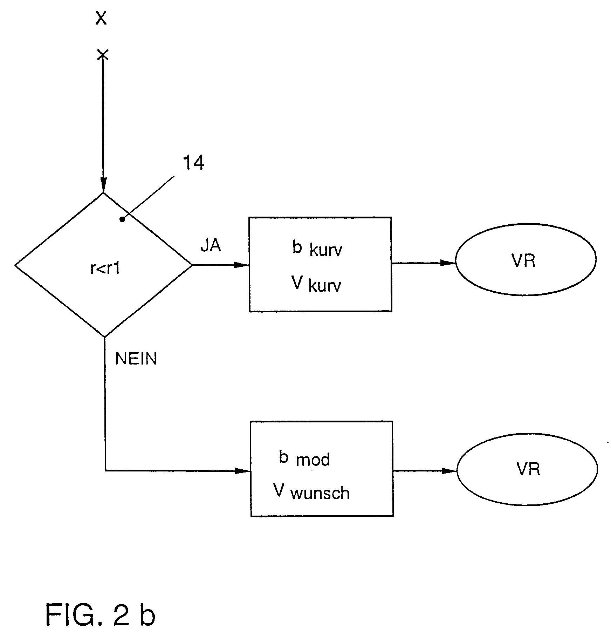

Im weiteren erfolgt die Beschreibung des erfindungsgemäßen Verfahrens zur Geschwindigkeitsregelung bei Objektverlust anhand des in Figur 2 dargestellten Ablaufdiagramms. In der Regelungseinrichtung 5 wird in einem ersten Schritt 11 geprüft, ob ein erfaßtes Objekt 2 mit den Abstandsdaten aᵢₛₜ vorhanden ist, ist dies der Fall, erfolgt eine Bildung der Stellgrößen l1 und l2 für die Antriebsmaschine und/oder die Bremseinrichtung zur Einstellung der Fahrgeschwindigkeit zumindest in Abhängigkeit eines Sollabstandes zu dem erfaßten Objekt. Wenn kein Objekt vom Abstandssensor 1 erfaßt wurde, also keine Abstandsdaten aᵢₛₜ existieren, hält die Regelungseinrichtung 5 die letzten erfaßten Abstandsdaten a_{letzt} des erfaßten Objektes fest und vergleicht im Schritt 12 den seit dem Objektverlust zurückgelegten Weg sᵢₛₜ mit dem letzten Ort des Objektes. Hat das Kraftfahrzeug den Ort noch nicht erreicht, wird im nächsten Schritt 13 eine Abfrage durchgeführt, ob ein Überholvorgang eingeleitet wurde. Dies geschieht beispielsweise über die Prüfung des linken Blinkers b. Bei einer Einleitung eines Überholvorgangs bildet die Regelungseinrichtung 5 bis zur Erfassung eines Objektes die Stellgrößen l1, l2 für die Fahrgeschwindigkeit in Abhängigkeit der vom Fahrer vorgegebenen Sollgeschwindigkeit v_{wunsch} und einer für den Überholvorgang definierten Sollbeschleunigung b_{über}.

Ist das Ergebnis im Schritt 12, daß das Kraftfahrzeug den letzten erfaßten Ort des Objektes überschritten hat, wird im Schritt 14 abgefragt, ob der Krümmungsradius r der befahrenen Straße kleiner als ein vorgegebener Krümmungsradius r1 ist. In dem Fall, daß der Krümmungsradius r den vorgegebenen Krümmungsradius r1 unterschreitet, wird davon ausgegangen, daß eine Kurve vorliegt und die Stellgrößen 11 und 12 die Fahrgeschwindigkeit werden in Abhängigkeit einer vom Krümmungsradius r der befahrenen Straßen abhängigen Sollgeschwindigkeit vₖᵤᵣᵥ in Verbindung mit einer vom Krümmungsradius abhängigen Sollbeschleunigung bₖᵤᵣᵥ ermittelt. Die Sollgeschwindigkeit wird dabei außerdem unter Beachtung der vom Fahrer eingegebenen Sollgeschwindigkeit v_{wunsch} festgelegt. Wird während der Kurvenfahrt ein Objekt 2 erfaßt, erfolgt die Bildung der Stellgrößen außerdem in Abhängigkeit des für die Fahrsituation gebildeten Sollabstandes aₛₒₗₗ, wobei in die Berechnung des Sollabstandes außerdem der Erfassungsbereich A des Abstandssensors 1 eingeht, so daß sich der gebildete Sollabstand aₛₒₗₗ evtl. bis auf einen Mindestabstand verringert. Dies hat den Grund, daß bei Kurvenfahrten, oft ein Objekt erst erfaßt wird, wenn der ohne Einbeziehung des Erfassungsbereichs A gebildete Sollabstand aₛₒₗₗ bereits unterschritten wurde. Die Regelung würde versuchen, den Sollabstand aₛₒₗₗ einzuhalten, verlöre das Objekt wieder und würde aus dem Grund wieder beschleunigen. Bei erneuter Erfassung des Objektes würde sich der Vorgang wiederholen. Deshalb wird zum Vermeiden dieses "Sägens" der Erfassungsbereich A des Abstandssensors in die Sollabstandsberechnung einbezogen.

Im Fall, daß der Krümmungsradius r größer als der vorgegebene, eine Kurve definierender Krümmungsradius r1 ist, wird angenommen, daß sich das Kraftfahrzeug auf einem im wesentlichen geraden Straßenabschnitt befindet. Das Objekt ist also abgebogen oder hat seine Geschwindigkeit über die vorgegebene Sollgeschwindigkeit v_{wunsch} erhöht und den Erfassungsbereich A des Abstandssensors 1 verlassen. Die Stellgrößen l1 und l2 für die Fahrgeschwindigkeit werden dann in Abhängigkeit der vorgegebenen Sollgeschwindigkeit v_{wunsch} in Verbindung mit einer festgelegten Sollbeschleunigung b_{mod} gebildet.

### BEZUGSZEICHENLISTE

- 1: Abstandssensor
- 2: Objekt
- 3: Verarbeitungseinrichtung
- 4: Einrichtung zur Ermittlung des Krümmungsradius
- 5: Regelungseinrichtung
- 6: Bremseinrichtung
- 7: Antriebsmaschine
- 8: Einrichtung zur Ermittlung des Sollabstandes
- 9: Anzeigeeeinrichtung
- 10: Einrichtung zur Anzeige eines Überholvorganges
- 11 - 14: Schritte
- A: Erfassungsbereich
- a: Abstandsdaten
- r: Krümmungsradius
- aᵢₛₜ: Abstandsdaten
- 11, 12: Stellgrößen
- vᵢₛₜ: momentane Fahrgeschwindigkeit
- aₛₒₗₗ: Sollabstand
- b: Signal
- v_{wunsch}: vom Fahrer vorgegebene Sollgeschwindigkeit
- a_{letzt}: letzte Abstandsdaten
- sᵢₛₜ: Weg des Kraftfahrzeuges
- b_{über}: Beschleunigung für den Überholvorgang
- r1: vorgegebener Krümmungsradius
- vₖᵤᵣᵥ: vom Krümmungsradius abhängige Sollgeschwindigkeit
- bₖᵤᵣᵥ: vom Krümmungsradius abhängige Sollbeschleunigung
- b_{mod}: festgelegte Sollbeschleunigung
- vᵣₑₗ: Relativgeschwindigkeit

## Patentansprüche

1. Verfahren zur Geschwindigkeitsregelung eines Kraftfahrzeuges, bei dem die Abstände zu einem vor dem Kraftfahrzeug erfaßten Objekt (2) von einem Abstandssensor (1) detektiert und einer Regelungseinrichtung (5) zugeführt werden, welche in Abhängigkeit von einem zumindest aus der momentanen Fahrgeschwindigkeit (vᵢₛₜ) ermittelten Sollabstand (aₛₒₗₗ) zum erfaßten Objekt (2) und/oder von einer vorgegebenen Sollgeschwindigkeit (v_{wunsch}) Stellgrößen (I1, I2) zur Einstellung der Fahrgeschwindigkeit des Kraftfahrzeuges bildet, wobei bei Objektverlust durch den Abstandssensor (1) der Grund des Objektverlustes durch die Regelungseinrichtung (5) ermittelt wird und die Stellgröße (l1, l2) zur Einstellung der Fahrgeschwindigkeit von der Regelungseinrichtung (5) in Abhängigkeit vom Grund des Objektverlustes gebildet wird
**dadurch gekennzeichnet, daß**
bei Objektverlust der letzte detektierte Abstand (a_{letz}) zum erfaßten Objekt (5) in der Regelungseinrichtung (2) festgehalten wird und mit dem zurückgelegten Weg (sᵢₛₜ) des Kraftfahrzeuges seit dem Objektverlust verglichen wird, wobei bei einem zurückgelegten Weg (sᵢₛₜ), der kleiner als der letzte detektierte Abstand (a_{letzt}) zum erfaßten Objekt (2) oder gleich dem letzten detektierten Abstan ist, von der Regelungseinrichtung (5) eine Prüfung durchgeführt wird, ob ein Überhotvorgang (b) eingeleitet wurde.

2. Verfahren nach Anspruch 1, **dadurch gekennzeichnet, daß** der Objektverlust durch Nichtdetektierung von Abständen (aᵢₛₜ) durch den Abstandssensor (1) festgestellt wird.

3. Verfahren nach Anspruch 2, **dadurch gekennzeichnet, daß** bei einem Überholvorgang von der Regelungseinrichtung (5) eine Stellgröße (11, 12) für die Fahrgeschwindigkeit in Abhängigkeit von der vorgegebenen Sollgeschwindigkeit (v_{wunsch}) in Verbindung mit einer für den Überholvorgang definierten Sollbeschleunigung (b_{über}) gebildet wird.

4. Verfahren nach einem der vorangegangenen Ansprüche, **dadurch gekennzeichnet, daß** bei einem zurückgelegten Weg (sᵢₛₜ), der größer als der letzte detektierte Abstand (a_{letzt}) zum erfaßten Objekt (2) ist, von der Regelungseinrichtung (5) eine Prüfung vorgenommen wird, ob die befahrene Straße einen Krümmungsradius (r) vorgegebener Größe aufweist.

5. Verfahren nach Anspruch 4, **dadurch gekennzeichnet, daß** bei einem Krümmungsradius (r) der kleiner als der Krümmungsradius (r1) vorgegebener Größe ist, von der Regelungseinrichtung (5) Stellgrößen (l1, l2) für die Fahrgeschwindigkeit in Abhängigkeit von einer vom Krümmungsradius (r) der befahrenen Straße abhängigen Sollgeschwindigkeit (vₖᵤᵣᵥ) in Verbindung mit einer vom Krümmungsradius (r) abhängigen Sollbeschleunigung (bₖᵤᵣᵥ) gebildet wird.

6. Verfahren nach Anspruch 4 oder 5, **dadurch gekennzeichnet, daß** bei einem Krümmungsradius (r) der befahrenen Straße der größer als der Krümmungsradius (r1) vorgegebener Größe ist, von der Regelungseinrichtung (5) Stellgrößen (l1, l2) für die Fahrgeschwindigkeit in Abhängigkeit von der vorgebbaren Sollgeschwindigkeit (v_{wunsch}) in Verbindung mit einer vorgebbaren oder ermittelbaren Sollbeschleunigung (b_{mod}) gebildet wird.

7. Verfahren nach einem der vorangegangenen Ansprüche, **dadurch gekennzeichnet, daß** bei Erfassung eines neuen Objektes (2) durch den Abstandssensor (1) nach dem Objektverlust von der Regelungseinrichtung (5) Stellgrößen (l1, l2) für die Fahrgeschwindigkeit zumindest in Abhängigkeit des ermittelten Sollabstandes (aₛₒₗₗ) gebildet wird.

8. Verfahren nach einem der vorangegangen Ansprüche, **dadurch gekennzeichnet, daß** der Sollabstand (aₛₒₗₗ) bei einem Krümmungsradius (r) der befahrenen Straße, der kleiner als ein vorgegebener Krümmungsradius (r1) ist, zusätzlich in Abhängigkeit des Erfassungsbereiches (A) des Abstandssensors (1) gebildet wird.

9. Verfahren nach Anspruch 8, **dadurch gekennzeichnet, daß** der in Abhängigkeit des Erfassungsbereiches (A) des Abstandssensors (1) gebildete Sollabstand (aₛₒₗₗ) einen vorgegebenen Abstand nicht unterschreitet.

10. Vorrichtung zur Geschwindigkeitsregelung eines Kraftfahrzeuges mit einem Abstandssensor (1) zur Detektierung von Abständen (aᵢₛₜ) zu einem vor dem Kraftfahrzeug erfaßten Objekt (2) und einer Regelungseinrichtung (5) zum Bilden von Stellgrößen (I1, I2) für die Fahrgeschwindigkeit des Kraftfahrzeuges in Abhängigkeit von einem zumindest aus der momentanen Fahrgeschwindigkeit (vᵢₛₜ) ermittelten Sollabstand (aₛₒₗₗ) zum erfaßten Objekt (2) und/oder von einer vorgegebenen Sollgeschwindigkeit (v_{wunsch}), welcher als lstgrößen zumindest die momentane Fahrgeschwindigkeit (vᵢₛₜ) und die Abstände (aᵢₛₜ) zu einem vor dem Kraftfahrzeug erfaßten Objekt (2) zuführbar sind, wobei bei Objektverlust durch den Abstandssensor (1) der Grund des Objektverlustes von der Regelungseinrichtung (5) ermittelbar ist und die Stellgrößen (I1, I2) zur Einstellung der Fahrgeschwindigkeit von der Regelungseinrichtung (5) in Abhängigkeit vom Grund des Objektverlustes bildbar ist,
**dadurch gekennzeichnet, daß**
bei Objektverlust der letzte detektierte Abstand (a_{letzt}) zum erfaßten Objekt (2) in der Regeleinrichtung (5) festhaltbar ist und mit dem zurückgelegten Weg (sᵢₛₜ) des Kraftfahrzeuges seit dem Objektverlust vergleichbar ist, wobei bei einem zurückgelegten Weg (sᵢₛₜ), der kleiner als der letzte detektierte Abstand (a_{letzt}) zum erfaßten Objekt (2) oder gleich dem letzten detektierten Abstand ist, von der Regelungseinrichtung (5) eine Prüfung durchführbar ist, ob ein Überholvorgang eingeleitet wurde.

11. Vorrichtung nach Anspruch 10, **dadurch gekennzeichnet, daß** der Objektverlust durch Nichtdetektierung von Abständen (aᵢₛₜ) durch den Abstandssensor (1) feststellbar ist.

12. Vorrichtung nach Anspruch 10, **dadurch gekennzeichnet, daß** bei einem Überholvorgang von der Regelungseinrichtung (5) Stellgrößen (l1, l2) für die Fahrgeschwindigkeit in Abhängigkeit von der vorgegebenen Sollgeschwindigkeit (v_{wunsch}) in Verbindung mit einer für den Überholvorgang definierten Sollbeschleunigung (b_{über}) bildbar ist.

13. Vorrichtung nach einem der Ansprüche 10 bis 12, **dadurch gekennzeichnet, daß** bei einem zurückgelegten Weg (sᵢₛₜ) größer als der letzte detektierte Abstand (a_{letzt}) zum erfaßten Objekt (2) von der Regelungseinrichtung (5) eine Prüfung vornehmbar ist, ob die befahrene Straße einen Krümmungsradius (r) unterhalb einer vorgegebenen Größe aufweist.

14. Vorrichtung nach Anspruch 13, **dadurch gekennzeichnet, daß** bei einem Krümmungsradius (r) kleiner als der Krümmungsradius (r1) vorgegebener Größe von der Regelungseinrichtung (5) Stellgrößen (l1, l2) für die Fahrgeschwindigkeit in Abhängigkeit von einer vom Krümmungsradius (r) der befahrenen Straße abhängigen Sollgeschwindigkeit (vₖᵤᵣᵥ) in Verbindung mit einer vom Krümmungsradius (r) abhängigen Sollbeschleunigung (bₖᵤᵣᵥ) bildbar ist.

15. Vorrichtung nach Anspruch 13 oder 14, **dadurch gekennzeichnet, daß** bei einem Krümmungsradius (r) größer als der Krümmungsradius (r1) vorgegebener Größe von der Regelungseinrichtung (5) Stellgrößen (l1, l2) für die Fahrgeschwindigkeit in Abhängigkeit von der vorgebbaren Sollgeschwindigkeit (v_{wunsch}) in Verbindung mit einer vorgebbaren oder ermittelbaren Sollbeschleunigung (b_{mod}) bildbar ist.

16. Vorrichtung nach einem der Ansprüche 10 bis 15, **dadurch gekennzeichnet, daß** bei Erfassung eines neuen Objektes (2) durch den Abstandssensor (1) nach dem Objektverlust von der Regelungseinrichtung (5) Stellgrößen (l1, l2) für die Fahrgeschwindigkeit zumindest in Abhängigkeit vom ermittelten Sollabstand (aₛₒₗₗ) bildbar ist.

17. Vorrichtung nach einem der Ansprüche 10 bis 16, **dadurch gekennzeichnet, daß** der Sollabstand (aₛₒₗₗ) bei einem Krümmungsradius (r) der befahrenen Straße kleiner als ein vorgegebener Krümmungsradius (r1) zusätzlich in Abhängigkeit vom Erfassungsbereich (A) des Abstandssensors (1) bildbar ist.

18. Vorrichtung nach Anspruch 17, **dadurch gekennzeichnet, daß** der von der Regelungseinrichtung (5) in Abhängigkeit von dem Erfassungsbereich (A) des Abstandssensors (1) gebildeten Sollabstand (aₛₒₗₗ) einen vorgegebenen Abstand nicht unterschreitet.

## Claims

1. Motor vehicle speed control method, in which the distances from an object (2) detected in front of the motor vehicle are detected by a distance sensor (1) and fed to a control device (5) which forms manipulated variables (I1, I2) for setting the driving speed of the motor vehicle as a function of a desired distance (a_{des}) from the detected object (2), which is determined at least from the instantaneous driving speed (v_{act}), and/or of a prescribed desired speed (v_{des}) , where in the event of loss of the object by the distance sensor (1) the reason for the loss of the object is determined by the control device (5), and the manipulated variable (I1, I2) for setting the driving speed is formed by the control device (5) as a function of the reason for the loss of the object, **characterized in that** in the event of a loss of the object the distance (aₗₐₛₜ) last detected from the detected object (2) is retained in the control device (5) and compared with the path (s_{act}) covered by the motor vehicle since the loss of the object where in the event of a path (s_{act}) covered which is smaller than the last detected distance (aₗₐₛₜ) from the detected object (2) or equal to the last detected distance, the control device (5) carries out a check as to whether an overtaking operation (b) has been initiated.

2. Method according to Claim 1, **characterized in that** the loss of the object is determined by the non-detection of distances (a_{act}) by the distance sensor (1).

3. Method according to Claim 2, **characterized in that** in the event of an overtaking operation the control device (5) forms a manipulated variable (I1, I2) for the driving speed as a function of the prescribed desired speed (v_{des}) in conjunction with a desired acceleration (bₒᵥₑᵣ) defined for the overtaking operation.

4. Method according to one of the preceding claims, **characterized in that** in the event of a path (s_{act}) covered which is larger than the last detected distance (aₗₐₛₜ) from the detected object (2), the control device (5) undertakes a check as to whether the road being driven on has a radius of curvature (r) of prescribed magnitude.

5. Method according to Claim 4, **characterized in that** in the event of a radius of curvature (r) smaller than the radius of curvature (r1) of prescribed magnitude, the control device (5) forms manipulated variables (I1, I2) for the driving speed as a function of a desired speed (v_{curve}) dependent on the radius of curvature (r) of the road being driven on in conjunction with a desired acceleration (b_{curve}) dependent on the radius of curvature (r).

6. Method according to Claim 4 or 5, **characterized in that** in the event of a radius of curvature (r) of the road being driven on which is larger than the radius of curvature (r1) of prescribed magnitude, the control device (5) forms manipulated variables (I1, I2) for the driving speed as a function of the prescribable desired speed (v_{des}) in conjunction with a desired acceleration (b_{mod}) which can be prescribed or determined.

7. Method according to one of the preceding claims, **characterized in that** in the event of detection of a new object (2) by the distance sensor (1) after the loss of the object, the control device (5) forms manipulated variables (I1, I2) for the driving speed, at least as a function of the desired distance (a_{des}) determined.

8. Method according to one of the preceding claims, **characterized in that** in the event of a radius of curvature (r) of the road being driven on which is smaller than a prescribed radius of curvature (r1), the desired distance (a_{des}) is additionally formed as a function of the detection range (A) of the distance sensor (1).

9. Method according to Claim 8, **characterized in that** the desired distance (a_{des}) formed as a function of the detection range (A) of the distance sensor (1) does not undershoot a prescribed distance.

10. Motor vehicle speed control device, having a distance sensor (1) for detecting distances (a_{act}) from an object (2) detected in front of the motor vehicle, and a control device (5) for forming manipulated variables (I1, I2) for the driving speed of the motor vehicle as a function of a desired distance (a_{des}) determined at least from the instantaneous driving speed (v_{act}), from the detected object (2) and/or of a prescribed desired speed (v_{des}), to which it is possible to feed as actual variables at least the instantaneous driving speed (v_{act}) and the distances (a_{act}) from an object (2) detected in front of the motor vehicle, where in the event of a loss of the object by the distance sensor (1), the control device (5) can determine the reason for the loss of the object, and the manipulated variables (I1, I2) for setting the driving speed can be formed by the control device (5) as a function of the reason for the loss of the object, **characterized in that** in the event of a loss of the object the distance (aₗₐₛₜ) last detected from the detected object (2) can be retained in the control device (5) and can be compared with the path (s_{act}) covered by the motor vehicle since the loss of the object where in the event of a path (s_{act}) covered which is smaller than the last detected distance (aₗₐₛₜ) from the detected object (2) or equal to the last detected distance, the control device (5) can carry out a check as to whether an overtaking operation has been initiated.

11. Device according to Claim 10, **characterized in that** the loss of the object can be determined by the non-detection of distances (a_{act}) by the distance sensor (1).

12. Device according to Claim 10, **characterized in that** in the event of an overtaking operation the control device (5) can form manipulated variables (I1, I2) for the driving speed as a function of the prescribed desired speed (v_{des}) in conjunction with a desired acceleration (bₒᵥₑᵣ) defined for the overtaking operation.

13. Device according to one of Claims 10 to 12, **characterized in that** in the event of a path (s_{act}) covered which is larger than the last detected distance (aₗₐₛₜ) from the detected object (2), the control device (5) can undertake a check as to whether the road being driven on has a radius of curvature (r) below a prescribed magnitude.

14. Device according to Claim 13, **characterized in that** in the event of a radius of curvature (r) smaller than the radius of curvature (r1) of prescribed magnitude, the control device (5) can form manipulated variables (I1, I2) for the driving speed as a function of a desired speed (v_{curve}) dependent on the radius of curvature (r) of the road being driven on in conjunction with a desired acceleration (b_{mod}) dependent on the radius of curvature (r).

15. Device according to Claim 13 or 14, **characterized in that** in the event of a radius of curvature (r) which is larger than the radius of curvature (r1) of prescribed magnitude, the control device (5) can form manipulated variables (I1, I2) for the driving speed as a function of the prescribable desired speed (v_{des}) in conjunction with a desired acceleration (b_{mod}) which can be prescribed or determined.

16. Device according to one of Claims 10 to 15, **characterized in that** in the event of detection of a new object (2) by the distance sensor (1) after the loss of the object, the control device (5) can form manipulated variables (I1, I2) for the driving speed, at least as a function of the desired distance (a_{des}) determined.

17. Device according to one of Claims 10 to 16, **characterized in that** in the event of a radius of curvature (r) of the road being driven on which is smaller than a prescribed radius of curvature (r1), the desired distance (a_{des}) can additionally be formed as a function of the detection range (A) of the distance sensor (1).

18. Device according to Claim 17, **characterized in that** the desired distance (a_{des}) formed by the control device (5) as a function of the detection range (A) of the distance sensor (1) does not undershoot a prescribed distance.

## Revendications

1. Procédé pour le réglage de la vitesse d'un véhicule à moteur, selon lequel les distances à un objet (2) détecté devant le véhicule à moteur sont détectées par un détecteur de distance (1) et sont amenées à un appareil de réglage (5) qui forme des grandeurs de commande (I1, I2) pour le réglage de la vitesse de roulement du véhicule à moteur en fonction d'une distance théorique (aₛₒₗₗ) déterminée au moins à partir de la vitesse de roulement instantanée (Vᵢₛₜ) à l'objet (2) détecté et/ou d'une vitesse théorique (V_{wunsch}) prédéfinie, la cause de la perte d'objet étant déterminée par l'appareil de réglage (5) en cas de perte d'objet par le capteur de distance (1) et la grandeur de commande (I1, I2) pour le réglage de la vitesse de roulement étant formée par l'appareil de réglage (5) en fonction de la cause de la perte d'objet,
**caractérisé en ce que**
en cas de perte d'objet, la dernière distance (a_{letzt}) détectée à l'objet (5) détecté est conservée dans l'appareil de réglage (2) et est comparée avec le déplacement (Sᵢₛₜ) parcouru du véhicule à moteur depuis la perte d'objet, moyennant quoi, dans le cas d'un déplacement (Sᵢₛₜ) parcouru qui est inférieur à la dernière distance (a_{letZt}) détectée à l'objet (2) détecté ou égal à la dernière distance détectée, l'appareil de réglage (5) effectue un essai pour voir si une manoeuvre de dépassement (b) a été engagée.

2. Procédé selon la revendication 1, **caractérisé en ce que** la perte d'objet est constatée par la non-détection de distances (aᵢₛₜ) par le capteur de distance (1).

3. Procédé selon la revendication 2, **caractérisé en ce que**, dans le cas d'une manoeuvre de dépassement, l'appareil de réglage (5) forme une grandeur de commande (I1, I2) pour la vitesse de roulement en fonction de la vitesse théorique (V_{wunsch}) prédéfinie en liaison avec une accélération théorique (b_{über}) définie pour la manoeuvre de dépassement.

4. Procédé selon l'une quelconque des revendications précédentes, **caractérisé en ce que**, dans le cas d'un déplacement (Sᵢₛₜ) parcouru qui est supérieur à la dernière distance (a_{letzt}) détectée à l'objet (2) détecté, l'appareil de réglage (5) effectue un essai pour voir si la route empruntée présente un rayon de courbure (r) de grandeur prédéfinie.

5. Procédé selon la revendication 4, **caractérisé en ce que**, dans le cas d'un rayon de courbure (r) qui est inférieur au rayon de courbure (r1) de grandeur prédéfinie, l'appareil de réglage (5) forme des grandeurs de commande (I1, I2) pour la vitesse de roulement en fonction d'une vitesse théorique (vₖᵤᵣᵥ) dépendante du rayon de courbure (r) de la route empruntée en liaison avec une accélération théorique (bₖᵤᵣᵥ) dépendante du rayon de courbure (r).

6. Procédé selon la revendication 4 ou 5, **caractérisé en ce que**, dans le cas d'un rayon de courbure (r) de la route empruntée qui est supérieur au rayon de courbure (r1) de grandeur prédéfinie, l'appareil de réglage (5) forme des grandeurs de commande (I1, I2) pour la vitesse de roulement en fonction de la vitesse théorique (V_{wunsch}) pouvant être prédéfinie en liaison avec une accélération théorique (b_{mod}) pouvant être prédéfinie ou déterminée.

7. Procédé selon l'une quelconque des revendications précédentes, **caractérisé en ce que**, en cas de détection d'un nouvel objet (2) par le capteur de distance (1) après la perte d'objet, l'appareil de réglage (5) forme des grandeurs de commande (I1, I2) pour la vitesse de roulement au moins en fonction de la distance théorique (aₛₒₗₗ) déterminée.

8. Procédé selon l'une quelconque des revendications précédentes, **caractérisé en ce que** la distance théorique (aₛₒₗₗ) est formée en supplément en fonction de la zone de détection (A) du capteur de distance (1) dans le cas d'un rayon de courbure (r) de la route empruntée qui est inférieur à un rayon de courbure (r1) prédéfini.

9. Procédé selon la revendication 8, **caractérisé en ce que** la distance théorique (aₛₒₗₗ) formée en fonction de la zone de détection (A) du capteur de distance (1) n'est pas inférieure à une distance prédéfinie.

10. Dispositif pour le réglage de la vitesse d'un véhicule à moteur avec un capteur de distance (1) pour la détection de distances (aᵢₛₜ) à un objet (2) détecté devant le véhicule à moteur et un appareil de réglage (5.) pour la formation de grandeurs de commande (I1, I2) pour la vitesse de roulement du véhicule à moteur en fonction d'une distance théorique (aₛₒₗₗ) déterminée au moins à partir de la vitesse de roulement instantanée (Vᵢₛₜ) à l'objet (2) détecté et/ou d'une vitesse théorique (V_{wunsch}) prédéfinie, auquel au moins la vitesse de roulement instantanée (Vᵢₛₜ) et les distances (aᵢₛₜ) à un objet (2) détecté devant le véhicule à moteur peuvent être amenées en tant que grandeurs réelles, la cause de la perte d'objet pouvant être déterminée par l'appareil de réglage (5) en cas de perte d'objet par le capteur de distance (1) et les grandeurs de commande (I1, I2) pour le réglage de la vitesse de roulement pouvant être formées par l'appareil de réglage (5) en fonction de la cause de la perte d'objet,
**caractérisé en ce que**
en cas de perte d'objet, la dernière distance (a_{letzt}) détectée à l'objet (2) détecté peut être conservée dans l'appareil de réglage (5) et peut être comparée avec le déplacement (Sᵢₛₜ) parcouru du véhicule à moteur depuis la perte d'objet, moyennant quoi, dans le cas d'un déplacement (Sᵢₛₜ) parcouru qui est inférieur à la dernière distance (a_{letzt}) détectée à l'objet (2) détecté ou égal à la dernière distance détectée, l'appareil de réglage (5) peut effectuer un essai pour voir si une manoeuvre de dépassement a été engagée.

11. Dispositif selon la revendication 10, **caractérisé en ce que** la perte d'objet peut être constatée par la non-détection de distances (aᵢₛₜ) par le capteur de distance (1).

12. Dispositif selon la revendication 10, **caractérisé en ce que**, dans le cas d'une manoeuvre de dépassement, l'appareil de réglage (5) peut former des grandeurs de commande (I1, I2) pour la vitesse de roulement en fonction de la vitesse théorique (v_{wunsch}) prédéfinie en liaison avec une accélération théorique (b_{über}) définie pour la manoeuvre de dépassement.

13. Dispositif selon l'une quelconque des revendications 10 à 12, **caractérisé en ce que**, dans le cas d'un déplacement (Sᵢₛₜ) parcouru qui est supérieur à la dernière distance (a_{letzt}) détectée à l'objet (2) détecté, l'appareil de réglage (5) peut effectuer un essai pour voir si la route empruntée présente un rayon de courbure (r) inférieur à une grandeur prédéfinie.

14. Dispositif selon la revendication 13, **caractérisé en ce que**, dans le cas d'un rayon de courbure (r) inférieur au rayon de courbure (r1) de grandeur prédéfinie, l'appareil de réglage (5) peut former des grandeurs de commande (I1, I2) pour la vitesse de roulement en fonction d'une vitesse théorique (Vₖᵤᵣᵥ) dépendante du rayon de courbure (r) de la route empruntée en liaison avec une accélération théorique (bₖᵤᵣᵥ) dépendante du rayon de courbure (r) .

15. Dispositif selon la revendication 13 ou 14 **caractérisé en ce que**, dans le cas d'un rayon de courbure (r) supérieur au rayon de courbure (r1) de grandeur prédéfinie, l'appareil de réglage (5) peut former des grandeurs de commande (I1, I2) pour la vitesse de roulement en fonction de la vitesse théorique (V_{wunsch}) pouvant être prédéfinie en liaison avec une accélération théorique (b_{mod}) pouvant être prédéfinie ou déterminée.

16. Dispositif selon l'une quelconque des revendications 10 à 15, **caractérisé en ce que**, en cas de détection d'un nouvel objet (2) par le capteur de distance (1) après la perte d'objet, l'appareil de réglage (5) peut former des grandeurs de commande (I1, I2) pour la vitesse de roulement au moins en fonction de la distance théorique (aₛₒₗₗ) déterminée.

17. Dispositif selon l'une quelconque des revendications 10 à 16, **caractérisé en ce que** la distance théorique (aₛₒₗₗ) peut être formée en supplément en fonction de la zone de détection (A) du capteur de distance (1) dans le cas d'un rayon de courbure (r) de la route empruntée inférieur à un rayon de courbure (r1) prédéfini.

18. Dispositif selon la revendication 17, **caractérisé en ce que** la distance théorique (aₛₒₗₗ) formée par l'appareil de réglage (5) en fonction de la zone de détection (A) du capteur de distance (1) n'est pas inférieure à une distance prédéfinie.
